# EUROPÄISCHE PATENTSCHRIFT

(11) **EP 1 936 093 B1**
(45) Veröffentlichungstag und Bekanntmachung des Hinweises auf die Patenterteilung: **15.04.2009**
(21) Anmeldenummer: 06026193.0
(22) Anmeldetag: 18.12.2006
(51) Int. Cl.: E06B 1/62, E04B 1/68

(54) **Dichtband zum Abdichten eines Spalts**
Sealing strip for sealing a gap
Bande d'étanchéité pour sceller une fente

(43) Veröffentlichungstag der Anmeldung: 25.06.2008
(73) Patentinhaber: ISO-Chemie GmbH, 73431 Aalen (DE)
(72) Erfinder:
(74) Vertreter: Wächter, Jochen

(56) Entgegenhaltungen:
- DE-A1- 19 944 611
- DE-A1-3102004 012 47
- DE-U1- 29 715 660

## Beschreibung

Die Erfindung bezieht sich auf ein Dichtband zum Abdichten eines Spalts zwischen einem Bauelement, wie Rahmenprofilelement eines Fensters oder einer Tür, und einem Bauwerk nach dem Oberbegriff des Anspruchs 1. Ein solches Dichtband ist aus DE 10 2004 012 473 A1 bekannt.

Zum Abdichten von Rahmenprofilelementen, beispielsweise von Festern oder Türen in Gebäudeöffnungen nach der mechanischen Fixierung des Rahmens in der Gebäudeöffnung sind verschiedene Systeme bekannt. Hierzu beschreibt die DE 43 07 528 A1 ein Dichtband, das aus einem elastisch rückstellbaren Weichschaumstoffstreifen besteht, der in komprimierter Form von einer Aufreißumhüllung umgeben ist, an deren Innenseite der Weichschaumstoffstreifen angeklebt ist. Die Umhüllung hat seitlich eine Lasche, an der sie aufgerissen werden kann. Sie ist ferner an ihrer Außenseite mit einem doppelseitig wirkenden Klebestreifen versehen, der im zu einer Rolle aufgewickelten Lieferzustand des Dichtbandes von einer Trennfolie bedeckt ist. Zum Ausrüsten des Rahmens eines Fensters oder einer Tür mit dem Dichtband wird dieses nach Entfernen der Trennfolie mittels des genannten Klebestreifens an den Rahmenprofilelementen angeklebt. Dieses kann werksseitig geschehen. Auf der Baustelle wird nach mechanischer Fixierung des Rahmens in der dafür vorgesehenen Gebäudeöffnung die Umhüllung an der erwähnten Lasche aufgerissen, so dass sich der Weichschaumstoffstreifen aus seinem komprimierten Zustand entspannen kann und sich an die Leibungsflächen der Gebäudeöffnung anlegen kann. Da vor dem Aufreißen der Umhüllung die Reißlasche von dem Dichtband lose absteht, ergibt sich die Gefahr, dass bei der Handhabung des mit dem Dichtband ausgerüsteten Rahmens während des Transports und der Montage die Umhüllung versehentlich aufgerissen wird, was zur Folge hat, dass sich der Weichschaumstoffstreifen in dem betreffenden Bereich entspannt, was die Arbeiten beim Montieren des Rahmens in der für ihn bestimmten Gebäudeöffnung erschwert. Weil die Reißlasche von dem Weichschaumstoffstreifen seitlich weg steht, ist es auch schwierig, zu Rollen aufgewickelte Dichtbänder zu stapeln, weil die Dichtbandrollen nicht flach aufeinander liegen können, so dass die Lagerhaltung erschwert ist. Weiterhin ist anzumerken, dass eine lediglich von einem Schaumstoffband gebildete Abdichtung zwischen Rahmen und Leibung in vielen Fällen besondere geforderte Dichtungseigenschaften nicht erfüllt, insbesondere wenn eine Dampfsperre verlangt wird.

Aus der eingangs genannten DE 10 2004 012 473 A1 ist ein bandartiges Verbindungselement zwischen einem Rahmenbauteil und einem Mauerwerk bekannt, das an dem Rahmenbauteil anklebbar ist und eine auslösbare, elastische Verlängerungsreserve in Querrichtung hat. An deren freien Rand ist sie mit einer Dauerklebeschicht versehen, mittels derer sie am Mauerwerk angeklebt werden kann. Sie ist dort auf der der Dauerklebeschicht abgewandten Seite mit einer Putzverbundlage in Form eines Vliese versehen, die die Haftung von Putz sicherstellen soll. Auch bei diesem Dichtband besteht nach werkseitiger Anbringung an dem Rahmenbauelement die Gefahr einer Beschädigung während des Transports, weil die Verlängerungsreserve wie eine Fahne von den Rahmenprofilen wegsteht und flattern kann.

Häufig wird von einer Abdichtung eines Rahmenbauelements in einer Gebäudeöffnung verlangt, dass sie dampfdicht ist oder andere Dichtungseigenschaften erfüllt, die weder ein Weichschaumstoffband noch ein Folienband jeweils allein erfüllen können. Der Erfindung liegt daher die Aufgabe zugrunde, ein Dichtband anzugeben, das die Vorteile von Schaumstoffdichtungen und Foliendichtungen in sich vereinigt und gleichzeitig den Vorteil hat, dass es zu einer kompakten Rolle aufgewickelt und in kompakter Form ohne wegstehende Teile werksseitig an einem Rahmenbauelement angebracht werden kann.

Diese Aufgabe wird hinsichtlich des Folienbandes durch die im Anspruch 1 angegebene Erfindung gelöst. Eine Dichtbandrolle mit den erfindungsgemäßen Merkmalen ist Gegenstand des Anspruchs 7. Vorteilhafte Ausgestaltungen der Erfindung sind Gegenstand der jeweils abhängigen Ansprüche.

Die Erfindung vereinigt ein Band aus einem weichelastischen Schaumstoff mit einem Folienband in solcher Form, dass beim Einbau eines Rahmenbauelements in einer Gebäudeöffnung eine Abdichtung durch das Weichschaumband und parallel im Abstand dazu durch das Folienband herstellbar ist, wobei die Möglichkeit besteht, in den Zwischenraum zwischen dem Weichschaumband und dem Folienband zusätzlich Montageschaum einzuspritzen, bevor das Folienband an der Leibung der Gebäudeöffnung angebracht wird.

Das Dichtband kann werksseitig an dem Rahmenbauelement angebracht werden und bildet dort eine kompakte Einheit, von der kein Teil störend vorsteht und Ursache für Beschädigungen während des Transports und der Montage des Rahmenbauelements sein kann.

Die Erfindung wird nachfolgend unter Bezugnahme auf ein in den Zeichnungen dargestelltes Ausführungsbeispiel näher erläutert. Es zeigt:
- Fig.1: Eine Querschnittsansicht eines Dichtbandes nach der Erfindung in einem teilweise aufgerichteten Zustand, und
- Fig. 2: Im Querschnitt das Dichtband nach Figur 1 in einem Zustand, wie es zu einer Rolle aufgerollt werden kann.

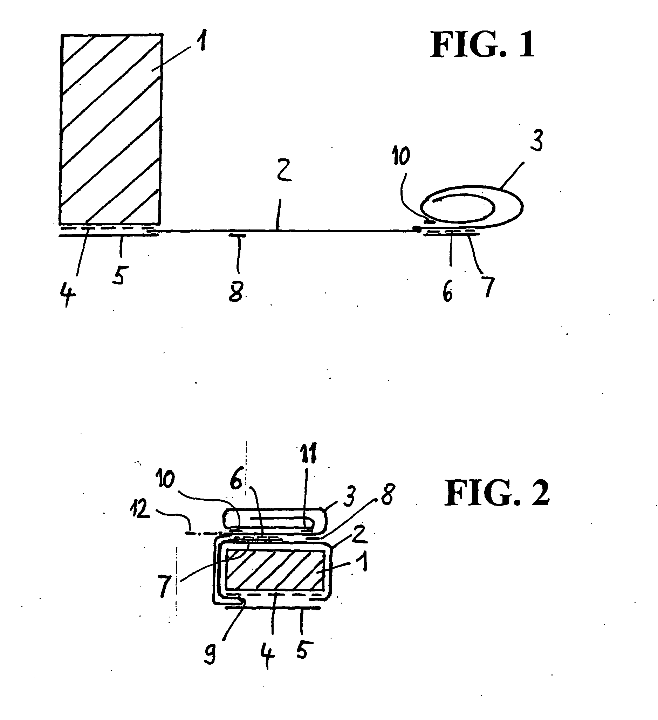

Das Dichtband nach der Erfindung besteht gemäß Fig. 1 aus einem elastisch komprimierbaren und rückstellfähigen Weichschaumstoffband 1 rechteckigen Querschnitts, einem Verbindungsband 2 und einem Dichtfolienband 3, die miteinander fest verbunden sind. Das Weichschaumstoffband 1 ist in Fig. 1 in einem entspannten Zustand dargestellt. An einer seiner Schmalseiten ist es mit einer Selbstklebeschicht 4 versehen, die von einer ersten abziehbaren Trennfolie 5 bedeckt ist. Das Verbindungsband 2 ist mit seinem einen Rand unter der Trennfolie 5 mit dem Weichschaumstoffband 1 fest verklebt, ggf. unter Zwischenfügung eines Gittergewebebandes. Das Verbindungsband 2 besteht aus einem biegeschlaffen Material, beispielsweise einer Kunststofffolie, insbesondere einer Klarsichtfolie, kann aber auch von einem Gittergewebe gebildet sein.

Am anderen Rand des Verbindungsbandes 2 ist das Dichtfolienband 3 fest angeschlossen, beispielsweise durch Verklebung oder Verschweißung.

Es ist an dieser Stelle zu betonen, dass anstelle einer hybriden Konstruktion, wie sie in Fig. 1 gezeigt ist, auch eine integrale Konstruktion möglich ist, bei der das Verbindungsband 2 und das Dichtfolienband 3 integral miteinander ausgebildet sind und aus demselben Material bestehen, das in diesem Falle entsprechend breiter ausgeführt ist. Die hybride Konstruktion hat Vorteile, wenn das Dichtfolienband relativ steif ist und sich daher zu dem noch zu beschreibenden Eintaschen des Weichschaumstoffbandes 1 weniger gut eignet.

Das Dichtfolienband 3 ist in Fig. 1 in einem noch eingewickelten Zustand dargestellt. Es trägt an seiner unteren Lage, die an das Verbindungsband 2 anschließt, eine Selbstklebeschicht 6, die von einer zweiten Trennfolie 7 bedeckt ist. Das Dichtfolienband 3 ist dazu bestimmt, ausgewickelt zu werden und mit seinem in Fig. 1 im Wickel innen liegend dargestellten Randbereich an einer Leibung angeklebt zu werden, beispielsweise mittels eines Dauerklebstoffs auf Butylkautschukbasis.

In alternativer Ausführungsform kann, wie bereits erwähnt, das Verbindungsband 2 aus einem Gittergewebe bestehen, das in die Selbstklebeschicht 4 am Weichschaumstoffband 1 eingelegt ist, oder es kann aus einer Folie bestehen, die sich über die gesamte Selbstklebeschicht 4 am Weichschaumstoffband 1 erstreckt und dort ausreichend große Durchbrüche aufweist, so dass die Selbstklebeschicht 4, in die die Folie eingebettet ist, von außen zugänglich ist und ihre Klebkraft nach außen durch die Durchbrüche hindurch entwickeln kann.

Fig. 2 zeigt die Anordnung nach Fig. 1 in einem Zustand, in dem das Dichtband geeignet ist, zu einer kompakten Rolle aufgewickelt zu werden.

In dem in Fig. 2 gezeigten Zustand ist der Weichschaumstoffkörper 1 komprimiert. Das Verbindungsband 2 ist um das komprimierte Weichschaumstoffband 1 herumgelegt und an der Unterseite desselben, wo sich die Selbstklebeschicht 4 befindet, an der Selbstklebeschicht 4 lösbar festgeklebt, unter Bildung einer Falte 9 umgelegt und bis zur Oberseite des Dichtbandes zurück geführt. Dort ist im Bereich des einen Randes des Dichtbandes das Dichtfolienband 3 mit der äußeren Lage des Verbindungsbandes 2 fest verbunden.

Das zu einem Wickel quer zusammengerollte Dichtfolienband 3 liegt auf dem Verbindungsband 2 auf, wo die zweite Trennfolie 7 ein Ankleben der Selbstklebeschicht 6 an dem Verbindungsband 2 verhindert. In dem anderen Randbereich des Dichtbandes ist das Dichtfolienband 3 an dem auf dem Weichschaumstoffband 1 liegenden Verbindungsband 2 durch eine dritte lösbare Klebefixierung 8 angeheftet. Anstatt einer Klebefixierung kann für das Verhaften an der Stelle 8 auch eine Ultraschall- oder Thermo-Verschweißung vorgenommen sein.

Das Dichtfolienband 3 ist gegen ein Auseinanderrollen durch eine lösbare Klebeverbindung 10 gesichert, die als einzelnen Klebstoffpunkten oder einer Klebstoffleiste bestehen kann und die am Verbindungsband 2 ansetzende Wicklungslage des eingewickelten Dichtfolienbandes 3 mit der nachfolgenden Wicklungslage verhaftet. Auch hier ist stattdessen eine Ultraschall- oder Thermoverschweißung möglich. Eine weitere Klebe- oder Schweißverbindung 11 kann auf der der Selbstklebeschicht 8 abgewandten Seite der äußersten Wicklungslage des Dichtfolienbandes vorhanden sein, ist aber nicht unbedingt notwendig. Hat der aus dem Dichtfolienband 3 bestehende Wickel nur eine einzige Windung, ist die Klebeverbindung bevorzugt an der Stelle 11 vorgesehen.

In dem in Fig. 2 dargestellten Zustand ist das Dichtband an einem Rahmenbauelement anzubringen. Dazu ist es lediglich erforderlich, die erste Trennfolie 5 von dem Dichtband abzuziehen und dieses mittels der Selbstklebeschicht 4 an dem Rahmenbauelement anzukleben. In diesem Zustand kann das so werksseitig ausgerüstete Rahmenbauelement zur Baustelle geliefert werden. Dort wird nach dem mechanischen Fixieren des Rahmenbauelements in der dafür bestimmten Gebäudeöffnung das Verbindungsband 2 aus seiner lösbaren Verbindung mit der Selbstklebeschicht 4 in dem Bereich, wo es die Falte 9 bildet (siehe Fig. 2) gelöst.

Zu diesem Zweck wird von der in Fig. 2 rechten Seite her das eingerollte Dichtfolienband 3 von dem Weichschaumband 1 abgehoben, bis sich die Klebefixierung 8 zwischen dem Dichtfolienband und dem Verbindungsband 2 löst. Anschließend kann man das eingerollte Dichtungsband 3 ergreifen und nach rechts über das Weichschaumband 1 ziehen. Hierbei löst sich das Verbindungsband 2 aus seiner Klebeverbindung mit dem Weichschaumstoffband 1 im Bereich der Falte 9, wodurch die von dem Verbindungsband 2 zuvor gebildete Tasche für das Weichschaumstoffband 1 geöffnet wird. Das Weichschaumstoffband 1 kann sich nun aus seiner komprimierten Gestalt elastisch rückstellen. Diese Rückstellung kann gegebenenfalls verzögert erfolgen, wenn das Weichschaumstoffmaterial mit einer die Rückstellung verzögernden Imprägnierung getränkt ist.

Es kann nun das Verbindungsband 2 nach rechts ausgebreitet werden, und nach Abziehen der zweiten Trennfolie 7 wird das Dichtfolienband 3 mittels der Selbstklebeschicht 6 an dem Rahmenbauelement angeklebt. Nun kann, gegebenenfalls nach Ausschäumen des Zwischenraums zwischen dem Rahmenbauelement und der Bauwerksleibung, das Dichtfolienband 3 auseinander gewickelt und an der gegenüberliegenden Leibung der Bauwerksöffnung angeklebt werden. Hierfür ist es vorteilhaft, wenn der freie Randstreifen des Dichtfolienbandes 3 mit einer Dauerklebeschicht, beispielsweise aus einem Butylkautschuk, versehen ist, die gegebenenfalls von einer weiteren abziehbaren Trennfolie bedeckt ist.

Um das Lösen des Dichtfolienbandes 3 aus dem in Fig. 2 gezeigten Zustand zu erleichtern, insbesondere, wenn es in Fig. 2 zunächst nach links abgezogen werden soll, kann das mit dem Verbindungsband 2 verbundene äußere Ende des Dichtfolienbandes 3 in Fig. 2 ggf. zu einer Lasche verlängert sein, die nach links vorsteht und leicht ergriffen werden kann. Diese Lasche ist in Fig. 2 mit 12 strichpunktiert eingezeichnet.

Das Dichtfolienband 3 kann ein mit einer Dampfsperrfolie versehenes Vliesband sein, das das Einputzen erleichtert, und es kann an seinem Randstreifen mit einer Dauerklebeschicht auf Butylkautschukbasis versehen sein, die von einer abziehbaren Trennfolie bedeckt ist. Diesbezüglich kann auf den Stand der Technik Bezug genommen werden, so dass sich eine detaillierte Erläuterung dieser Merkmale erübrigt. Weiterhin sei betont, dass innerhalb einer äußeren Windung das Dichtfolienband 3 nicht unbedingt gewickelt sein muss, sondern es auch im Zickzack gefaltet sein kann. Die äußere Windung ist zum Zusammenhalten des Dichtfolienbandes 3 im Lieferzustand wichtig, wenn auf innere Verklebungen aller Lagen des Dichtfolienbandes verzichtet werden soll.

## Patentansprüche

1. Dichtband zum Abdichten eines Spalts zwischen einem Bauelement, wie Rahmenprofilelement eines Fensters oder einer Tür, und einem Bauwerk, mit einem Dichtfolienband (3) zur Überbrückung des genannten Spalts, das in einem zum Anheften an das Bauelement bestimmten Randbereich mit einer Selbstklebeschicht (6) versehen ist, die von einer ersten abziehbaren Trennfolie (7) bedeckt ist, **gekennzeichnet durch** die folgenden Merkmale:
das Dichtband besteht aus einem Weichschaumband (1) rechteckigen Querschnitts, das an einer seiner Schmalseiten mit einer Selbstklebeschicht (4) versehen ist, die von einer zweiten abziehbaren Trennfolie (5) bedeckt ist, einem Verbindungsband (2) aus einem biegeschlaffen Material, das mit seinem einen Rand an der mit der Selbstklebeschicht (4) versehenen Schmalseite des Weichschaumstoffbandes (1) befestigt ist, und dem genannten Dichtfolienband (3), das an seinem mit der Selbstklebeschicht (6) versehenen Randbereich mit dem anderen Rand des Verbindungsbandes (2) fest verbunden ist.

2. Dichtband nach Anspruch 1, **dadurch gekennzeichnet, dass** in die Selbstklebeschicht (4) des Weichschaumstoffbandes (1) ein Gittergewebe eingebettet ist, an dem das Verbindungsband (2) befestigt ist.

3. Dichtband nach Anspruch 1, **dadurch gekennzeichnet, dass** in die Selbstklebeschicht (4) des Weichschaumstoffbandes (1) ein Gittergewebe eingebettet ist, das zugleich das Verbindungsband (2) bildes.

4. Dichtband nach Anspruch 1, **dadurch gekennzeichnet, dass** das Verbindungsband (2) einen Randstreifen aufweist, der mit Durchbrüchen versehen ist und in die Selbstklebeschicht (4) des Weichschaumstoffbandes (1) eingebettet ist.

5. Dichtband nach Anspruch 1 oder 2, **dadurch gekennzeichnet, dass** das Verbindungsband (2) und das Dichtfolienband (3) eine aus demselben Material bestehende integrale Einheit bilden.

6. Dichtband nach einem der Ansprüche 1 bis 5, **dadurch gekennzeichnet, dass** das Dichtfolienband (3) von einem Vliesband mit integrierter Dampfsperrfolie gebildet ist.

7. Dichtband nach einem der vorhergehenden Ansprüche, **dadurch gekennzeichnet, dass** das Dichtfolienband (3) im Bereich seinen freien Randes mit einen Butylkautschukbeschichtung versehen ist, die von einer abziehbaren Trennfolie bedeckt ist.

8. Dichtbandrolle aus einem aufgewickelten Dichtband, das aus einem komprimierten, rückstellfähigen Weichschaumstoffband (1) rechteckigen Querschnitts, einem dieses umhüllenden Verbindungsband (2) aus einem biegeschlaffen Material und einem Dichtfolienband (3) besteht, mit den folgenden weiteren Merkmalen:
a) das Weichschaumstoffband (1) ist an einer seiner eingewickelten Seiten mit einer Selbstklebeschicht (4) versehen, die von einem ersten, abziehbaren Trennfolienband (5) bedeckt ist,
b) an die mit der Selbstklebeschicht (4) versehene Seite des Weichschaumstoffbandes (1) ist ein erster Rand des Verbindungsbandes (2) fest angeheftet, und dieses ist um das Weichschaumstoffband (1) gelegt und an einem Rand der Selbstklebeschicht (4) lösbar verhaftet,
c) das Verbindungsband (2) ist an seinem mit der Selbstklebeschicht (4) verhafteten Bereich unter Bildung einer Falte (9) umgeschlagen und auf die der Selbstklebeschicht (4) abgewandten Seite des Weichschaumstoffbandes (1) rückgeführt, wo es einen zweiten Rand hat,
d) mit dem zweiten Rand des Verbindungsbandes (2) ist ein erster Rand des Dichtfolienbandes (3) verbunden,
e) das Dichtfolienband (3) hat benachbart dem an dem Verbindungsband (2) befestigten Rand eine Selbstklebeschicht (6), die von einem zweiten Trennfolienband (7) abgedeckt ist,
f) das Dichtfolienband (3) ist in Querrichtung zu wenigstens einer Windung eingewickelt mit einer im flachgedrückten Zustand vorhandenen Breite, die der Breite des Weichschaumstoffbandes (1) entspricht, und innerhalb des Wickels durch eine lösbare Klebefixierung (10) in sich selbst gegen Aufdrehen gesichert,
g) das Dichtfolienband (3) ist durch eine lösbare Klebefixierung (8) an dem auf dem Weichschaumstoffband (1) liegenden Verbindungsband (2) in einem Randbereich des Dichtbandes angeheftet.

9. Dichtbandrolle nach Anspruch 8, **dadurch gekennzeichnet, dass** in die Selbstklebeschicht (4) am Weichschaumstoffband (1) ein Gittemetz eingelegt ist, an dem das Verbindungsband (2) befestigt ist.

10. Dichtbandrolle nach Anspruch 8, **dadurch gekennzeichnet, dass** das Verbindungsband (2) von einem Gittergewebeband gebildet ist.

11. Dichtbandrolle nach Anspruch 8 oder 9, **dadurch gekennzeichnet, dass** das Verbindungsband (2) und das Dichtfolienband (3) aus demselben Material bestehen und eine integrale Einheit bilden.

12. Dichtbandrolle nach einem der Ansprüche 8 bis 11, **dadurch gekennzeichnet, dass** das Dichtfolienband (3) von einem Vliesband mit integrierter Dampfsperrfolie gebildet ist.

13. Dichtbandrolle nach Anspruch 12, **dadurch gekennzeichnet, dass** das Dichtfolienband (3) im Bereich seines freien Randes mit einer Butylkautschukbeschichtung versehen ist, die von einer abziehbaren Trennfolie bedeckt ist.

## Claims

1. Sealing tape for sealing a gap between a component, such as a profiled frame element of a window or a door, and a construction, comprising a sealing film strip (3) for bridging the aforementioned gap and which is provided in a specific edge region, intended for attachment to the component, with a self-adhesive layer (6), which is covered by a first removable separating film (7), **characterised by** the following features:
the sealing tape is composed of a flexible foam strip (1) with a rectangular cross-section provided on one of the narrow sides thereof with a self-adhesive strip (4) which is covered by a second removable separating film (5), a connection strip (2) which is made of a flexible material and one edge of which is secured to the narrow side of the flexible foam strip (1) provided with the self-adhesive layer (4), and the aforementioned sealing film strip (3), of which the edge region, which is provided with the self-adhesive layer (6), is rigidly connected to the other edge of the connection strip (2).

2. Sealing tape according to claim 1, **characterised in that** a mesh fabric, to which the connection strip (2) is secured, is embedded in the self-adhesive layer (4) of the flexible foam strip (1).

3. Sealing tape according to claim 1, **characterised in that that** a mesh fabric, which also forms the connection strip (2), is embedded in the self-adhesive layer (4) of the flexible foam strip (1).

4. Sealing tape according to claim 1, **characterised in that** the connection strip (2) comprises an edge strip which is provided with openings and is embedded in the self-adhesive layer (4) of the flexible foam strip (1).

5. Sealing tape according to either claim 1 or claim 2, **characterised in that** the connection strip (2) and the sealing film strip (3) form an integral unit made of the same material.

6. Sealing tape according to any one of claims 1 to 5, **characterised in that** the sealing film strip (3) is formed from a non-woven material with an integrated vapour barrier film.

7. Sealing tape according to any one of the preceding claims, **characterised in that** the sealing film strip (3) is provided in the region of the free edge thereof with a butyl rubber coating covered by a removable separating film.

8. Roll of sealing tape formed from rolled-up sealing tape which is composed of a compressed, resilient flexible foam strip (1) with a rectangular cross-section, a connection strip (2) which surrounds said flexible foam strip and is made of a flexible material, and a sealing film strip (3), having the following further features:
a) one of the rolled-up sides of the flexible foam strip (1) is provided with a self-adhesive layer (4) which is covered by a first removable separating film strip (5),
b) a first edge of the connection strip (2) is rigidly attached to the side of the flexible foam strip (1) provided with the self-adhesive layer (4), and said connection strip is arranged around the flexible foam strip (1) and releaseably attached to an edge of the self-adhesive layer (4),
c) the connection strip (2), in the region where it is connected to the self-adhesive layer (4), is folded over to form a fold (9) and extends back along the side of the flexible foam (1) remote from the self-adhesive layer (4), where said connection strip has a second edge,
d) a first edge of the sealing film strip (3) is connected to the second edge of the connection strip (2),
e) the sealing film strip (3) comprises, adjacent to the edge secured to the connection strip (2), a self-adhesive layer (6) which is covered by a second separating film strip (7),
f) the sealing film strip (3) is rolled up in the transverse direction into at least one winding with a width, when flattened, that corresponds to the width of the flexible foam strip (1), and is secured against unwinding within the winding by a releaseable adhesive connection (10) into itself,
g) the sealing film strip (3) is secured to the connection strip (2), resting on the flexible foam strip (1), in an edge region of the sealing tape by a releaseable adhesive connection (8).

9. Roll of sealing tape according to claim 8, **characterised in that** a grid, to which the connection strip (2) is secured, is introduced into the self-adhesive layer (4) on the flexible foam strip (1).

10. Roll of sealing tape according to claim 8, **characterised in that** the connection strip (2) is formed by a mesh fabric strip.

11. Roll of sealing tape according to claim 8 or claim 9, **characterised in that** the connection strip (2) and the sealing film strip (3) are made of the same material and form an integral unit.

12. Roll of sealing tape according to any one of claims 8 to 11, **characterised in that** the sealing film strip (3) is formed from a non-woven material with an integrated vapour barrier film.

13. Roll of sealing tape according to claim 12, **characterised in that** the sealing film strip (3) is provided in the region of the free edge thereof with a butyl rubber coating covered by a removable separating film.

## Revendications

1. Bande d'étanchéité pour sceller une fente entre un élément de construction, tel qu'un élément profilé de cadre d'une fenêtre ou d'une porte, et un ouvrage, comprenant un ruban de film d'étanchéité (3) pour ponter la fente citée, qui est muni dans une zone de bordure destinée à adhérer sur l'élément de construction d'une couche auto-adhésive (6) recouverte d'une première feuille de séparation (7) retirable, **caractérisée par** les caractéristiques suivantes :
la bande d'étanchéité est constituée d'une bande de mousse souple (1) de section transversale rectangulaire, qui est munie sur l'un de ses petits côtés d'une couche auto-adhésive (4) recouverte d'une seconde feuille de séparation (5) retirable, d'une bande de jonction (2) en une matière flexible et lâche, qui est fixée par l'un de ses bords sur le petit côté, muni de la couche auto-adhésive (4), de la bande de mousse souple (1), et du ruban de film d'étanchéité cité (3), qui est assemblé fixement, sur sa zone de bordure munie de la couche auto-adhésive (6), avec l'autre bord de la bande de jonction (2).

2. Bande d'étanchéité suivant la revendication 1, **caractérisée en ce qu'**un tissu en treillis, sur lequel est fixée la bande de jonction (2), est enrobé dans la couche auto-adhésive (4) de la bande de mousse souple (1).

3. Bande d'étanchéité suivant la revendication 1, **caractérisée en ce qu'**un tissu en treillis, qui forme simultanément la bande de jonction (2), est enrobé dans la couche auto-adhésive (4) de la bande de mousse souple (1).

4. Bande d'étanchéité suivant la revendication 1, **caractérisée en ce que** la bande de jonction (2) présente un ruban de bordure, qui est muni de percées et est enrobé dans la couche auto-adhésive (4) de la bande de mousse souple (1).

5. Bande d'étanchéité suivant l'une des revendications 1 et 2, **caractérisée en ce que** la bande de jonction (2) et le ruban de film d'étanchéité (3) forment une unité intégrale composée de la même matière.

6. Bande d'étanchéité suivant l'une des revendications 1 à 5, **caractérisée en ce que** le ruban de film d'étanchéité (3) est formé d'une bande de non-tissé avec une feuille pare-vapeur intégrée.

7. Bande d'étanchéité suivant l'une des revendications précédentes, **caractérisée en ce que** le ruban de film d'étanchéité (3) est muni dans la zone de son bord libre d'un revêtement de caoutchouc butyle, qui est recouvert d'une feuille de séparation retirable.

8. Rouleau formé d'une bande d'étanchéité enroulée, constituée d'une bande de mousse souple comprimée (1), susceptible de rappel, de section transversale rectangulaire, d'une bande de jonction (2) gainant cette dernière en une matière flexible et lâche, et d'un ruban de film d'étanchéité (3), avec les autres caractéristiques suivantes :
a) la bande de mousse souple (1) est munie sur l'un de ses côtés enroulés d'une couche auto-adhésive (4) recouverte d'un premier ruban de feuille de séparation (5) retirable,
b) sur le côté de la bande de mousse souple (1), muni de la couche auto-adhésive (4), un premier bord de la bande de jonction (2) est attaché fixement, et cette bande est pliée autour de la bande de mousse souple (1) et adhère de façon détachable sur un bord de la couche auto-adhésive (4),
c) sur sa zone adhérant à la couche auto-adhésive (4), la bande de onction (2) est rabattue en formant un pli (9) et renvoyée sur le côté de la bande de mousse souple (1), opposé à la couche auto-adhésive (4), où elle présente un second bord,
d) un premier bord du ruban de film d'étanchéité (3) est assemblé avec le second bord de la bande de jonction (2),
e) le ruban de film d'étanchéité (3) présente, au voisinage du bord fixé sur la bande de jonction (2), une couche auto-adhésive (6) recouverte d'un second ruban de feuille de séparation (7),
f) le ruban de film d'étanchéité (3) est enroulé dans la direction transversale en au moins une spire d'une largeur, dans l'état aplati, qui correspond à la largeur de la bande de mousse souple (1), et est bloqué en lui-même contre une rotation, à l'intérieur de l'enroulement, par une fixation collée (10) détachable,
g) le ruban de film d'étanchéité (3) est attaché dans une zone de bordure de la bande d'étanchéité par une fixation collée détachable (8) sur la bande de jonction (2), située sur la bande de mousse souple (1).

9. Rouleau de bande d'étanchéité suivant la revendication 8, **caractérisé en ce qu'**un treillis est inséré dans la couche auto-adhésive (4) sur la bande de mousse souple (1), treillis sur lequel est fixée la bande de jonction (2).

10. Rouleau de bande d'étanchéité suivant la revendication 8, **caractérisé en ce que** la bande de jonction (2) est formée d'une bande de tissu en treillis.

11. Rouleau de bande d'étanchéité suivant l'une des revendications 8 et 9, **caractérisé en ce que** la bande de jonction (2) et le ruban de film d'étanchéité (3) se composent de la même matière et forment une unité intégrale.

12. Rouleau de bande d'étanchéité suivant l'une des revendications 8 à 11, **caractérisé en ce que** le ruban de film d'étanchéité (3) est formé d'une bande de non-tissé avec une feuille pare-vapeur intégrée.

13. Rouleau de bande d'étanchéité suivant la revendication 12, **caractérisé en ce que** le ruban de film d'étanchéité (3) est muni dans la zone de son bord libre d'un revêtement de caoutchouc butyle, recouvert d'une feuille de séparation retirable.
